# FASCICULE DE BREVET EUROPEEN

(11) **EP 3 577 273 B1**
(45) Date de publication et mention de la délivrance du brevet: **07.04.2021**
(21) Numéro de dépôt: 18702298.3
(22) Date de dépôt: 02.02.2018
(51) Int. Cl.: D21H 27/18, B32B 29/00, D21H 27/22, D21H 19/26, D21H 19/38, D21H 21/28, D21H 17/67

(54) **PAPIER DECOR POUR STRATIFIES**
DEKORPAPIER FÜR LAMINATE
DECORATION PAPER FOR LAMINATES

(30) Priorité: 03.02.2017 FR 1750957
(43) Date de publication de la demande: 11.12.2019
(73) Titulaire: Ahlstrom-Munksjö Oyj, 00100 Helsinki (FI)
(72) Inventeur: CHARIGNON, Sébastien, 38490 Saint Ondras (FR)
(74) Mandataire: Nony
(86) Numéro de dépôt international: PCT/EP2018/052684
(87) Numéro de publication internationale: WO 2018/141915

(56) Documents cités:
- WO-A1-2014/068502
- WO-A1-2016/175824
- WO-A2-2006/076725
- US-A1- 2016 009 114

## Description

La présente invention concerne le domaine des papiers décors. En particulier, l'invention concerne un papier décor convenant à l'impression jet d'encre, un procédé de fabrication d'un tel papier, et un stratifié comprenant un tel papier.

Depuis de nombreuses années, on emploie des panneaux ou profilés décoratifs stratifiés (encore appelés « stratifiés ») comme matériaux dans les habitations et les locaux commerciaux et industriels. Des applications typiques de tels stratifiés sont les revêtements de sols, en particulier ceux imitant le parquet, les revêtements de meubles, les dessus de tables, les plans de travail ou les chaises, entre autres.

Il existe deux grandes sortes de « stratifiés » décoratifs : ceux dits haute-pression (HPL ou « High-Pressure Laminates ») et ceux dits basse-pression (LPL ou « Low-Pressure Laminates »).

On produit les stratifiés décoratifs haute pression (HPL) à partir d'un corps constitué de feuilles imprégnées de résine. Ces feuilles sont généralement en papier kraft et ont été imprégnées d'une résine thermodurcissable, le plus souvent d'une résine phénolique. Après avoir imprégné les feuilles de résine, on les sèche, on les découpe, puis on les empile les unes sur les autres. Le nombre de feuilles dans la pile dépend des applications et varie typiquement entre 3 et 9, mais peut être supérieur. Sur la pile de feuilles constituant le corps, on place ensuite un papier décor. Celui-ci est en général une feuille de papier portant un motif imprimé ou de couleur ou comportant des particules décoratives, imprégnée d'une résine thermodurcissable, choisie parmi les résines de mélamine-formaldéhyde, d'urée-formaldéhyde, de benzoguanamine-formaldéhyde ou de polyester insaturé, ou d'une résine autre, notamment époxy ou polyuréthane.

En général, on place au-dessus du papier décor, une feuille protectrice, dite « overlay », dépourvue de motifs et d'aspect transparent dans le stratifié final, pour améliorer la résistance à l'abrasion du stratifié. La pile de feuilles imprégnées est ensuite placée dans une presse à stratifier dont les plateaux sont munis d'une tôle conférant l'état de surface recherché au stratifié. Puis, on densifie la pile par chauffage, à une température de l'ordre de 110°C à 170°C, et par pressage, à une pression de l'ordre de 5,5 MPa à 11 MPa, pendant environ 25 à 60 minutes, pour obtenir une structure unitaire.

On fixe ensuite cette dernière sur un support de base ; par exemple on la colle sur un panneau de particules agglomérées, notamment de particules de bois agglomérées.

Il est encore possible d'obtenir des stratifiés haute pression selon un procédé dit sans imprégnation ou « *dry process* », qui consiste à utiliser un papier décor non imprégné de résine thermodurcissable, généralement placé en sandwich entre un papier barrière imprégné de résine positionné en dessous, et une feuille protectrice overlay également imprégnée de résine et positionnée au-dessus. Il existe des variantes où la feuille overlay n'est pas placée au-dessus mais au-dessous. L'imprégnation du papier décor avec la résine se produit lorsqu'une pression est exercée sur l'empilement des différentes feuilles, par diffusion de la résine hors des feuilles des papiers barrière et overlay avec lesquelles le papier décor est en contact ou à proximité.

On produit les stratifiés décoratifs dits basse-pression (LPL) en utilisant uniquement un papier décor imprégné de résine thermodurcissable, et éventuellement une feuille overlay, que l'on stratifie directement sur le support de base pendant un cycle court, la température étant de l'ordre de 160 à 200°C et la pression de 1,25 MPa à 3 MPa.

Outre les procédés haute-pression et basse-pression, il existe un procédé de stratification en continu appelé CPL (« *continuous pressed laminates* »), qui est similaire au procédé haute-pression mais où des papiers imprégnés déroulés depuis des bobines sont utilisés en lieu et place de feuilles prédécoupées.

Le papier décor utilisé pour la fabrication de stratifiés est en général une feuille de papier réalisée sur une machine à papier. Un papier décor est généralement utilisé pour conférer un aspect esthétique particulier au support stratifié sur lequel il est apposé. Il va ainsi masquer le support (à savoir le panneau s'il s'agit d'un stratifié basse pression ou le corps de feuilles imprégnées de résine phénolique s'il s'agit d'un stratifié haute pression) de par son opacité et amener une couleur s'il s'agit d'un papier uni ou un motif s'il s'agit d'un papier décor imprimé.

Or, ce motif décoratif imprimé, qui consiste traditionnellement à imiter l'aspect d'un matériau naturel, comme le bois ou le marbre, prend des formes plus diversifiées pour faire face à des demandes de personnalisation. Cet accroissement dans la variété des motifs s'accompagne ainsi d'une multitude de designs et d'une réduction des quantités à produire par type de motif.

Ce phénomène de personnalisation des décors et de production en petite série n'est pas sans conséquences sur les difficultés rencontrées par les fabricants de papiers décor. En effet, pour des productions de motifs en grande série, les techniques d'impression telles que l'héliogravure présentent l'avantage d'imprimer à des cadences très élevées, autorisant des machines imposantes mécaniquement où les formes d'impression sont des cylindres gravés relativement coûteux et dédiés à un motif. De ce fait, ces techniques d'impression ne s'avèrent pas financièrement rentables pour de petites séries.

Parmi les techniques d'impression suffisamment souples pour imprimer de petites quantités de papier décor à la demande, l'impression par jet d'encre s'avère être une technique très prometteuse car le pilotage par ordinateur permet le passage très rapide d'un motif à un autre.

Toutefois, l'adaptation des papiers décors pour l'impression jet d'encre confronte les fabricants à des difficultés majeures liées au procédé d'obtention des stratifiés.

Dans le processus classique de fabrication des stratifiés, le papier décor est d'abord imprimé, puis imprégné de résine et finalement pressé à chaud avec son support à haute ou basse-pression. L'étape d'imprégnation nécessite de disposer d'un papier décor possédant une résistance élevée à l'état humide, de manière à conserver une tenue suffisante après son immersion totale dans la résine, celle-ci étant de préférence aqueuse, ainsi qu'une capacité à être totalement imprégné ou tout au moins totalement transpercé par la résine dans un temps le plus court possible. Les caractéristiques liées à l'imprégnation sont généralement obtenues en utilisant des papiers décors possédant une perméabilité à l'air et à la résine d'imprégnation très importante.

La technique d'impression par jet d'encre repose sur le principe d'une fixation d'encre à la surface du substrat à imprimer; ce dernier doit donc, pour obtenir une impression nette et de haute qualité, avoir une absorption d'encre contrôlée. Ainsi les papiers habituellement utilisés pour l'impression jet d'encre hors du domaine de la fabrication des stratifiés pour produire des impressions couleur, des graphiques ou des imprimés de qualité photographique présentent une surface fermée, produite par un revêtement de résine synthétique ou un revêtement couché. De tels papiers ne peuvent donc convenir pour la préparation de stratifiés étant donné qu'ils ne peuvent être imprégnés de manière satisfaisante par une résine thermodurcissable. Egalement, ces papiers ne relevant pas de la catégorie des papiers décors ne peuvent convenir au procédé de stratification sans imprégnation (« dry process »), en raison de la délamination des différentes couches qui se produit lors des tests de résistance à la vapeur d'eau et d'immersion dans l'eau, puisque la diffusion de la résine est contrariée par la surface fermée de ces papiers, engendrant ainsi un stratifié mal réticulé.

Il apparaît aussi que les papiers décors standards utilisés en héliogravure ne peuvent convenir en l'état pour une impression jet d'encre en raison de leur inaptitude à maintenir l'encre à la surface du papier, ceci étant lié à leur grande porosité, nécessaire à une imprégnation rapide et uniforme par la résine.

Des papiers décor améliorés par une enduction avec une couche réceptrice d'encre comprenant des particules fixatrices d'encre et un liant ont déjà été décrits, notamment dans les brevets EP 1 749 134 et EP 1 044 822.

Le brevet EP 1 044 822 décrit l'utilisation de techniques conventionnelles d'enduction pour la couche réceptrice d'encre, qui peuvent conduire à réduire substantiellement les propriétés d'imprégnation du papier par une résine du fait de la pré-imprégnation de la base papier par la résine et du fait de la présence de la couche réceptrice d'encre.

Le brevet EP1 749 134 montre l'augmentation du temps d'imprégnation par la résine du côté de la face couchée.

Les particules fixatrices d'encre sont classiquement des silices, de surface spécifique élevée.

Ces silices ont tendance à fermer le papier décor, en abaissant la porosité et la perméabilité à l'air et à la résine d'imprégnation.

Plus la quantité de liant est importante dans la couche appliquée, meilleure est la tenue de ces silices sur le substrat papetier, mais la perméabilité à l'air ainsi que la rapidité d'absorption de la résine par le papier diminue avec l'accroissement de la quantité de liant, et la vitesse d'imprégnation chute.

Pour préserver la capacité du papier décor à être imprégné rapidement, on peut chercher à réduire la quantité de liant, mais la tenue des particules fixatrice d'encre est alors diminuée, ce qui pose des problèmes de poussières et d'encrassement des installations utilisant ces papiers.

Par ailleurs, les papiers décors comprennent généralement dans le substrat papetier de base un pigment opacifiant d'indice de réfraction relativement élevé, tel que du dioxyde de titane. De ce fait si les particules d'encre pénètrent dans le substrat lors de l'impression, ceci tend à générer en raison de la proximité du pigment opacifiant un aspect de laitance indésirable, du fait de la diffusion de la lumière par le pigment opacifiant. C'est particulièrement le cas avec l'impression jet d'encre où les encres sont à la fois très fluides et les pigments très petits, ce qui favorise la pénétration de l'encre dans le papier.

WO 2006/076725 A2 divulgue un papier décor pouvant être utilisé pour former un laminé, le papier décor comportant un mélange chauffé comportant un pigment d'indice de réfraction élevé et du kaolin déshydroxylé, le kaolin déshydroxylé comportant du metakaolin ou du kaolin complètement calciné. Ce mélange est ajouté dans la masse du substrat papetier et permet de réduire la quantité de pigment d'indice de réfraction élevé, tel que le dioxyde de titane, à introduire dans le substrat papetier, tout en maintenant les propriétés du papier décor, telles que le niveau d'opacité et de blancheur.

La publication WO 2016/175824 A1 divulgue un papier décor sans traitement de couchage, et notamment sans liant ajouté extérieurement.

US 8 153 211 divulgue un papier décor comportant une couche réceptrice d'encre qui est colorée de façon à ce que le papier présente la même couleur qu'une feuille de l'empilement qui est dépourvue de couche réceptrice d'encre, dans le but de réduire la quantité de pigment dans le substrat papetier.

Le brevet EP 1 749 134 revendique un procédé d'enduction permettant d'obtenir un papier décor imprimable en jet d'encre sans réduction importante de ses propriétés d'imprégnation. Toutefois, l'enduction est plus délicate à mettre en œuvre qu'avec les techniques conventionnelles, et notamment doit se faire hors ligne.

EP 2 828 092 décrit un papier décor comportant une couche réceptrice d'encre déposée à hauteur de 10 à 30 g/m² et dans lequel sensiblement toute la charge pigmentaire opacifiante du papier est contenue dans la couche réceptrice d'encre, afin d'éviter d'avoir à introduire un pigment opacifiant dans le substrat papetier.

US 2016/0009114 A1 divulgue un papier décor comportant un substrat papetier de base et une couche réceptrice d'encre comportant un pigment choisi parmi les oxydes d'aluminium, les hydroxydes d'aluminium, la boehmite et les silices.

La demande WO 2014/068502 décrit un papier décor de faible opacité qui comporte une charge pulvérulente répartie dans son épaisseur, choisie pour ses propriétés d'absorption d'huile. Un tel papier décor, du fait de sa faible opacité, doit être superposé au sein du stratifié à une feuille de fond opaque. Or, dans certaines applications, il est préférable d'éviter l'utilisation d'une telle feuille de fond pour ne pas complexifier le procédé de fabrication et ne pas augmenter les coûts de mise œuvre.

La demande WO 2016/066531 divulgue un procédé de fabrication de stratifié décoratif dans lequel une composition fixatrice d'encre est déposée par un procédé de projection de gouttelettes préalablement à l'impression jet d'encre. La composition fixatrice d'encre comporte des silices et un liant.

Comme l'état de la technique le révèle, la fabrication d'un papier décor permettant une impression jet d'encre de bonne qualité tout en présentant une vitesse d'absorption de résine élevée pour fabriquer des stratifiés haute ou basse pression suppose de parvenir à répondre à des exigences contradictoires.

L'invention vise à remédier aux problèmes rencontrés dans l'art antérieur avec les papiers décors pour stratifiés en proposant un papier décor possédant à la fois une bonne opacité, imprimabilité en impression jet d'encre et convenant à la réalisation par voie industrielle de tous types de stratifiés, avec ou sans imprégnation préalable du papier décor, notamment par la mise en œuvre des procédés haute-pression, basse-pression ou sans imprégnation (dry process), préférentiellement basse-pression.

L'invention atteint ce but grâce à un papier décor pour stratifié décoratif selon la revendication 1. La surface spécifique peut notamment être strictement inférieure à 100 m²/g. La quantité de 0,5 à 9 g/m² s'entend par face traitée. Ainsi, lorsque les deux faces du papier sont traitées, la quantité de charge de surface spécifique allant de 2 à 100 m²/g et d'indice de réfraction inférieur ou égal à 2 est comprise pour le papier décor entre 1 et 18 g/m². La quantité de charge est comprise par exemple entre 2 et 4 g/m² par face traitée.

Par « traitement de surface » présent sur une face du papier au moins, on désigne les composés qui résultent de l'application sur cette face d'au moins une composition appliquée en une ou plusieurs passes de façon à obtenir la quantité surfacique voulue de charge. De préférence, l'application s'effectue de telle sorte que le profil de distribution de la charge selon l'invention dans l'épaisseur du substrat montre une concentration en particules de la charge qui décroit depuis la surface de la face traitée vers la profondeur du substrat papetier.

Le traitement de surface selon l'invention agit efficacement comme une barrière vis-à-vis de la diffusion de l'encre au sein du papier, et empêche l'encre d'atteindre outre mesure le pigment opacifiant contenu dans le substrat papetier. On évite ainsi le phénomène de diffusion de la lumière précité.

Du fait de la faible surface spécifique de la charge selon l'invention, par opposition aux charges traditionnellement rencontrées en jet d'encre telles que décrites dans le brevet US 8153211, l'invention autorise une dépose de couche suffisamment élevée pour créer une véritable barrière physique et ainsi limiter l'atteinte du pigment opacifiant par l'encre du procédé jet d'encre.

Les particules de charge de faible surface spécifique selon l'invention présentent l'avantage de créer une structure plus perméable à l'air et à la résine et lèvent des contraintes quant au taux de liant nécessaire, qui peut ainsi être plus faible, ce qui contribue également à obtenir une structure plus perméable à l'air et à la résine.

Le taux de liant plus faible ne se traduit pas par des problèmes de formation de poussières car les particules de la charge selon l'invention sont plus faciles à lier que les particules des charges traditionnellement rencontrées en jet d'encre, telles que les silices.

L'invention permet ainsi, de façon surprenante, de trouver un compromis satisfaisant entre les diverses exigences contradictoires rappelées ci-dessus.

De plus, le traitement selon l'invention rend le papier moins sensible au type d'encre utilisé, à savoir aqueux ou réticulable par UV. La fonction barrière est efficace dans l'invention pour maintenir l'encre à la surface du papier, quelles que soient les différences d'ionicité de l'encre. Le papier convient très bien à la fois pour des encres aqueuses, UV (réticulable sous ultraviolet) et EBC (réticulable sous faisceau d'électrons et connue sous le nom « d'Electron Beam Curing »). Autrement dit, le traitement selon l'invention amène une fonction de barrière physique qui opère indépendamment du type d'encre utilisé et de la formulation de l'encre, et confère au papier décor un caractère universel face à la nature de l'encre.

Le traitement de surface est déposé en une quantité pouvant aller jusqu'à 10 g/m² par face traitée, mieux inférieure ou égale à 5 g/m² par face traitée, en poids sec. La quantité est par exemple comprise entre 3 et 6 g/m² par face traitée, ou entre 4 et 5 g/m².

Le ratio de charge par rapport au liant peut être supérieur à 3:1, notamment à 3,5 :1 en poids sec.

Seule une face du substrat papetier peut recevoir le traitement de surface.

Il suffit de traiter en effet une seule face du papier, à savoir celle destinée à l'impression. Toutefois, compte-tenu de la bonne imprégnabilité par la résine du papier obtenu selon l'invention, la totalité du papier peut le cas échant être traitée par des procédés d'enduction qui vont distribuer une partie du traitement à la fois dans l'épaisseur du papier et sur les deux faces du papier. Différents traitements papetiers connus de l'homme du métier de type presse encolleuse (Size Press), système à transfert de film (Film Press), couchage barre, crayon, lame, rideau, cylindre gravé, pulvérisation, application par projection de gouttelettes (type jet d'encre notamment) peuvent ainsi être utilisés pour appliquer le traitement de surface.

De préférence, le traitement de surface est appliqué par Film Press, ce qui permet de ne traiter qu'une seule face à la fois et sur une épaisseur relativement faible. Dans ce cas, le profil de distribution de la charge dans l'épaisseur du papier décor est tel que la concentration en particules de la charge décroit rapidement avec la profondeur.

La surface spécifique de la charge va de préférence de 2 à 50 m²/g, notamment de 10 à 30 m²/g.

Le papier peut présenter sur au moins la face traitée par le traitement de surface un temps de pénétration de résine inférieur ou égal à 10s, mieux à 5s.

Le papier présente de préférence sur chacune de ses faces un temps de pénétration de résine inférieur ou égal à 10s, mieux à 5s

Le liant représente, en poids sec, entre 10 et 50% du poids du traitement de surface. Le liant peut ainsi être présent sur le papier entre 0.05 et 2.5 g/m² par face traitée.

Le liant est hydrosoluble. Le liant peut comporter ou être constitué de PVOH.

Le traitement de surface peut être sans silice et/ou sans carbonates et/ou sans pigment opacifiant, notamment sans Ti0₂.

Le traitement de surface peut comporter de la silice dans une proportion inférieure ou égale à 50% en masse de la charge de surface selon l'invention, c'est-à-dire la charge de surface spécifique selon l'invention et d'indice de réfraction inférieur ou égal à 2, mieux entre 5 et 30 % en masse. La silice utilisée est de surface spécifique supérieure à 100 m²/g, et mieux à 150 m²/g. La présence de silice en surface du papier, dans une faible proportion relative, peut permettre d'améliorer encore la définition de l'impression, sans pour autant boucher le papier outre mesure.

La charge selon l'invention peut être inorganique, et peut comporter au moins un composé choisi parmi les argiles, les argiles calcinées, les kaolins, notamment les kaolins naturels, les kaolins calcinés, les kaolins délaminés et autres silicates d'aluminium, notamment de synthèse, les talcs, les terres de diatomées, le tri-hydrate d'aluminium, et leurs mélanges, le composé étant choisi par ailleurs de façon à présenter la surface spécifique requise par l'invention.

Le traitement de surface peut comporter par ailleurs un sel d'un métal alcalino-terreux, notamment du CaCl₂.

Le traitement de surface peut comporter par ailleurs un polymère cationique, notamment un polyDADMAC.

Le pigment opacifiant d'indice de réfraction supérieur à 2 peut être introduit dans la masse du substrat.

La quantité de pigment opacifiant, notamment de Ti02, introduite dans la masse du substrat, peut être supérieure ou égale à 10% du poids sec total du papier en g/m², plus préférentiellement elle est supérieure ou égale à 20%, encore mieux à 25%.

La présente description comprend aussi un papier décor selon l'invention, comportant, avant son imprégnation par une résine, notamment thermodurcissable, au moins un motif imprimé sur au moins l'une de ses faces.

Un tel motif peut être imprimé par impression jet d'encre, de préférence avec une encre aqueuse, une encre réticulable sous UV, une encre réticulable sous EB (Electron Beam), une encre à solvant ou à éco solvant.

L'invention a encore pour objet un papier décor imprimé selon la revendication 12.

Selon encore un autre de ses objets, l'invention concerne un procédé de fabrication d'un papier décor selon la revendication 13.

Selon encore un autre de ses objets, l'invention concerne un stratifié haute, basse- pression ou stratifié en continu selon la revendication 14.

De préférence, le stratifié est un stratifié basse-pression.

La présente description comprend aussi l'utilisation d'une composition comportant un liant et une charge de surface spécifique allant de 2 à 100 m²/g et d'indice de réfraction inférieur ou égal à 2, pour améliorer l'imprimabilité par impression jet d'encre d'un papier décor, la composition étant appliquée de telle sorte que la quantité de charge sur le papier représente en poids sec entre 0,5 et 9 g/m² par face traitée.

Le papier traité comporte de préférence, comme mentionné plus haut, un pigment opacifiant, d'indice de réfraction supérieur à 2.

### Charge

Au sens de l'invention, on entend désigner par « charge », des particules d'un unique type de matériau particulaire ou un mélange de particules de différents types de matériaux particulaires, présentant chacun les caractéristiques requises en termes de surface spécifique et d'indice de réfraction. De préférence, la charge est constituée d'un unique matériau particulaire, par exemple du kaolin calciné.

Les particules fixatrices d'encre d'une charge convenant à l'invention présentent une surface spécifique allant de 2 à 100 m²/g, mieux de 2 à 50 m²/g.

La surface spécifique des particules d'une charge convenant à l'invention est mesurée par la méthode BET selon la norme DIN 66132.

Les particules d'une charge convenant à l'invention peuvent présenter un diamètre médian D50 en masse variant de 0.1 à 20 µm

Les particules d'une charge convenant à l'invention peuvent présenter une forme choisie parmi une forme lamellaire, une forme globulaire, une forme sphérique, ou toute forme intermédiaire entre les formes précédemment définies.

Les particules d'une charge selon l'invention présentent un indice de réfraction inférieur ou égal à 2. De préférence, les particules d'une charge convenant à l'invention présentent un indice de réfraction *n* compris entre 1.3 et 1.8. Le TiO₂ (formes rutile et anatase) présentant un indice de réfraction de 2.5 à 2.8 environ est donc exclu de la définition d'une charge selon l'invention.

La mesure de l'indice de réfraction s'effectue à l'aide d'un réfractomètre, dont le plus connu est celui d'Abbe.

Avantageusement, les particules d'une charge de l'invention seront choisies de sorte à avoir un indice de réfraction égal à, ou sensiblement proche, de l'indice de réfraction de la résine thermodurcissable destinée à imprégner le papier décoratif de l'invention.

Ainsi, entre une charge de l'invention et une résine thermodurcissable, l'écart Δₙ entre les indices de réfraction pourra avantageusement être inférieur ou égal à 0.3

Les particules d'une charge selon l'invention peuvent être choisies parmi des particules minérales, des particules organiques, et des mélanges de celles-ci.

De préférence, les particules de la charge sont choisies parmi des particules minérales.

Des particules de charge minérale convenant à l'invention peuvent être choisies parmi les argiles, les argiles calcinées, les kaolins (notamment naturel, calciné, délaminé et autres silicates d'aluminium, notamment de synthèse), le talc, les terres de diatomées, le tri-hydrate d'aluminium, et leurs mélanges, présentant chacun l'indice de réfraction et la surface spécifique requise.

Il est entendu que, lorsqu'un papier décoratif selon l'invention comprend plus d'un type de particules d'une charge selon l'invention, notamment au moins deux, voire au moins trois, ou encore au moins quatre types distincts de particules selon l'invention, c'est-à-dire conformes en termes de surface spécifique et d'indice de réfraction, les quantités indiquées ci-dessus de charge présente dans le traitement de surface doivent se comprendre comme s'adressant au mélange de ces particules, et non à chaque type de particules pris individuellement.

Selon un mode de réalisation préféré, un papier décor selon l'invention comprend avantageusement des particules minérales de charge constituées par du kaolin calciné. Avantageusement, ces particules sont mises en œuvre en une teneur variant de 2 à 4 g/m² en poids sec par face traitée.

Les particules de la charge, notamment minérales, mises en œuvre dans l'invention au sein du traitement de surface présentent de préférence une neutralité en termes d'acidité ou d'alcalinité vis-à-vis des résines thermodurcissables. Par « neutralité en termes d'acidité ou d'alcalinité» de la charge selon de l'invention vis-à-vis des résines thermodurcissables, on entend désigner le fait que la charge ne se comporte ni comme un acide ni comme une base vis-à-vis des résines thermodurcissables.

### Papier décor

Un papier décor selon l'invention peut présenter un grammage allant de 20 à 200 g/m², de préférence de 40 à 100 g/m² et plus préférentiellement de 50 à 80 g/m².

Le grammage des feuilles est déterminé selon la norme ISO 536 après conditionnement selon la norme ISO 187. Il s'agit du grammage de la feuille avant imprégnation par la résine.

Un papier décor selon l'invention peut être de n'importe quelle couleur, Plus préférentiellement il est de teinte claire.

Un papier décor selon l'invention présente, notamment, la caractéristique d'être imprimable sur la face revêtue du traitement de surface, notamment par impression jet d'encre, tout en conservant des propriétés d'absorption de résine thermodurcissable identiques ou très proches de celles des papiers décor connus.

L'imprégnation d'un papier décor selon l'invention avec une résine, notamment thermodurcissable, se fait avantageusement après une étape d'impression jet d'encre de ce papier.

Un papier décor selon l'invention peut présenter une vitesse d'imprégnation par la résine, telle que définie ci-après, inférieure ou égale à 10 secondes, de préférence inférieure ou égale à 5 secondes, sur sa face revêtue du traitement de surface.

La vitesse d'imprégnation est caractérisée par la détermination du temps de pénétration de la résine à travers la feuille ; ce temps est déterminé de la façon suivante :
- on prépare une solution de résine à 50 % en poids en dissolvant de la résine mélamine-formaldéhyde KAURAMIN 773 en poudre dans de l'eau distillée chauffée vers 45°C. On ajuste sa viscosité par légère dilution avec de l'eau de telle sorte qu'elle soit de l'ordre de 55 mPas (cps) vers 20°C sur viscosimètre Brookfield mesurée à 100 tours/min - Arbre N° 2,
- on détermine comme suit le temps d'imprégnation d'une feuille de papier:
- on découpe deux échantillons en carré (10 x 10 cm) par essai ; pour tester chaque face, on repère la face,
- on remplit un verre de montre de résine,
- on dépose le carré de papier sur la surface de la résine, la face à tester en contact avec celle-ci, et on déclenche le chronomètre en même temps,
- on note le temps du transpercement total qui donne le temps de pénétration de la résine.

Un papier décor selon l'invention peut présenter une porosité Gurley de 5 à 60 secondes, idéalement 15 à 40 secondes. La perméabilité à l'air, ou méthode porosité Gurley, est déterminée selon la norme ISO 5636-5:2013.

Un papier décor de l'invention peut être lissé ou non-lissé. Un papier décor selon l'invention peut être lissé par tout procédé connu de l'homme de l'art. Le papier peut subir un traitement de lissage avant de recevoir le traitement de surface.

Selon un mode de réalisation, un papier décor selon l'invention présente, sur au moins l'une de ses faces, un lissé Bekk de 20 à 200 secondes.

L'application du traitement de surface peut s'effectuer par toute technique d'enduction connue. Ainsi différents traitements papetiers connus de l'homme du métier de type presse encolleuse (« size press »), système à transfert de film, couchage barre, crayon, lame, rideau, cylindre gravé, pulvérisation, application par projection de gouttelettes (type jet d'encre notamment) peuvent ainsi être utilisés pour appliquer le traitement. De préférence, le traitement s'effectue par un système à tranfert de film (Film Press), comme indiqué plus haut.

Le liant du traitement de surface est choisi parmi les liants hydrosolubles, notamment polymériques, par exemple PVOH, amidon, gélatine, caséine, CMC, guar. De préférence, le liant est du PVOH

L'opacité d'un papier décor selon l'invention peut être relativement élevée, selon les besoins.

Un stratifié haute-pression ou basse pression obtenu avec un papier décor selon l'invention peut comporter une ou plusieurs couches présentant une certaine opacité.

La mesure de l'opacité sur les stratifiés haute-pression (HP) ou basse-pression (BP) est effectuée en mesurant la luminance L₀ du stratifié coté kraft. La mesure de la luminance du stratifié à l'infini (L_{∞}) est faite sur fond blanc opaque. L'opacité est calculée selon la formule : L₀/L_{∞}^{∗}100. Plus la valeur obtenue est basse, moins le papier est opaque, ou plus il est transparent.

Un stratifié haute-pression ou basse pression obtenu avec un papier décor selon l'invention présente de préférence une opacité L₀/L_{∞}^{∗}100 supérieure ou égale à 70 %, mieux à 80 %.

Un papier selon l'invention peut présenter l'avantage d'apporter de l'opacité, et n'a pas à être utilisé avec une feuille de fond blanche ou de couleur à laquelle il est superposé.

Un papier décor selon l'invention peut comporter un motif imprimé sur au moins une de ses faces. L'impression de ce motif est avantageusement effectuée au moyen d'une impression jet d'encre. L'impression du motif est effectuée après l'étape de séchage et antérieurement à son imprégnation par la résine, notamment thermodurcissable.

Un papier décor selon l'invention peut comprendre par ailleurs les composants habituels entrant dans la formulation des papiers décor.

### Autres composants

Le substrat papetier d'un papier décor selon l'invention comprend classiquement des fibres de celluloses.

Les fibres de celluloses peuvent être un mélange de fibres de celluloses courtes et de fibres de celluloses longues.

Avantageusement, un papier décor selon l'invention comprend un mélange de fibres de celluloses comprenant de 60 à 100 %de fibres de cellulose courtes, en poids sec Le papier décor peut être sans fibres longues.

Selon un mode de réalisation, les fibres de celluloses courtes sont des fibres d'eucalyptus.

Un papier décor selon l'invention peut contenir des fibres synthétiques.

Le substrat papetier d'un papier décor selon l'invention peut comprendre au moins un agent additionnel choisi dans le groupe consistant un agent de résistance humide, un agent de rétention, des particules décoratives, des particules minérales ou organiques, un polymère cationique, un polymère organique absorbant.

Le substrat d'un papier décor de l'invention peut comprendre au moins un agent de résistance humide.

Par « agent de résistance humide », on entend tout agent apte à conférer au papier à l'état humide une résistance à la traction. De tels agents sont connus de l'homme de l'art. De préférence, un tel agent peut être une résine polyamine épichlorhydrine, une résine polyamide/polyamine-épichlorohydrine, un polyacrylate cationique, une résine mélamine-formaldéhyde modifiée ou un amidon cationique.

Un agent de résistance humide peut être présent à raison de 0,2 à 2,5 % en poids sec par rapport au poids sec de la feuille, et plus préférentiellement de 0,4 à 0,8%.

Le substrat d'un papier décor de l'invention peut comprendre dans sa composition au moins un agent de rétention.

Par « agent de rétention », on entend tout agent apte à permettre la fixation des charges minérales sur les fibres. De tels agents sont connus de l'homme de l'art. De préférence, un tel agent peut être choisi dans le groupe consistant en un système de microparticules inorganiques, par exemple des silices anioniques, et un polyacrylamide de faible ionicité.

Par « faible ionicité » au regard d'un polyacrylamide convenant à l'invention, on entend un polyacrylamide contenant peu de co-monomères cationiques de type ammonium quaternaire et/ou peu de groupements acrylate de caractère anionique.

Comme décrit précédemment, lors de la fabrication des stratifiés haute-pression, basse-pression ou stratifié en continu, le papier décor est en général d'abord imprimé, puis imprégné d'une résine thermodurcissable stable thermiquement, et finalement pressé à chaud avec son support à haute ou basse pression. Alternativement, comme décrit précédemment, dans le cas du procédé sans imprégnation (dry process), le papier décor imprimé est empilé, non-imprégné, entre deux papiers imprégnés de résine thermodurcissable, et l'imprégnation du papier décor est effectuée lors de la pression exercée sur l'ensemble de la pile. En conséquence, un papier décor selon l'invention peut être utilisé avec ou sans résine thermodurcissable.

En particulier, cette résine thermodurcissable peut être choisie parmi des résines mélamine-formaldéhyde, des résines urée-formaldéhyde, des résines benzoguanamine-formaldéhyde, des résines de polyester insaturé, des résines dicyandiamide-formaldéhyde, des résines époxy, des résines polyuréthannes, des résines acryliques, et leurs mélanges.

Une fois imprégné de résine, le papier décor est chauffé, la résine est partiellement réticulée (thermodurcie) afin qu'elle ne soit plus dans un état collant et que la feuille soit manipulable. Un papier décor imprégné de résine partiellement réticulée est appelé, en termes de métier, "film décor" ou "film décoratif' ou encore "film mélamine". Ce film mélamine contient un taux de résine de préférence variant de 50 à 55% mais pouvant aller de 30 à 70%.

Cette étape est généralement réalisée en portant le papier décor à des températures d'environ 110 à 140 °C et est contrôlée, de façon à ce que la résine, lors de la stratification finale du film décor, flue correctement dans la feuille, par la mesure du taux de volatils restants dans le film décor. En effet ce film décor comporte alors un certain pourcentage, de l'ordre de 5 à 8 %, de produits volatils (eau solvant de la résine, eau résultant de la condensation chimique de la résine, le formaldéhyde résiduel, les autres produits résiduels, ...). Ces volatils représentent les composés qui seront éliminés lors de la réticulation totale de la résine, pendant la stratification du film décor.

La résine, une fois totalement réticulée, après stratification, apportera de la résistance de surface au stratifié final (résistance à l'abrasion, résistance à la salissure, à la vapeur d'eau et aux agents chimiques comme les solvants, les acides et les bases, ...).

Selon un cas particulier, on imprègne un papier décor de l'invention avec une résine thermodurcissable, puis on réticule partiellement la résine en milieu acide, le taux de composés volatils étant compris entre 5 et 8 % en poids de la feuille.

L'invention concerne également un panneau ou profilé décoratif stratifié comportant au moins un papier décor selon l'invention.

Un stratifié selon l'invention peut comprendre une superposition, par contact, d'au moins deux, de préférence d'au moins trois, et plus préférentiellement d'au moins quatre, papiers décor selon l'invention.

### Procédé de fabrication

La base fibreuse d'un papier décor de l'invention, comprenant des fibres de cellulose, peut être préparée par tout procédé connu de l'homme de l'art.

Ainsi, en premier lieu est préparée une composition fibreuse de cellulose, ou pâte à papier, humide.

Selon un mode de réalisation, les particules de pigment opacifiant sont mélangées à la composition fibreuse de cellulose avant que celle-ci ne soit déposée sur la surface de formation.

Ce mélange peut être réalisé, par exemple, au niveau du cuvier de pâte à papier, de la caisse de tête, d'un cuvier de stockage, au niveau des raffineurs, ou de la pompe de mélange.

Selon un mode de réalisation, un tel mélange peut être effectué dans un cuvier de pâte à papier.

Un procédé de préparation d'un papier décor de l'invention peut comprendre une étape consistant en un ajout d'un agent de résistance humide et/ou un agent de rétention, tels que définis ci-dessus.

De préférence, l'agent de résistance humide est une résine polyamine épichlorhydrine, et l'agent de rétention peut être un système de microparticules inorganiques, par exemple des silices anioniques, ou un polyacrylamide de faible ionicité.

Un procédé de préparation d'un papier décor selon l'invention comprend une étape de séchage qui peut être effectuée par toute méthode connue de l'homme de l'art, et habituellement mise en œuvre dans le domaine. De telles méthodes ne nécessitent donc pas d'être décrites plus avant ici.

Un procédé de préparation d'un papier décor selon l'invention comprend une étape supplémentaire d'application d'un traitement de surface.

Cette étape peut notamment être effectuée par des procédés d'enduction tels que listés plus haut, de préférence en ligne, mais pouvant encore être hors ligne.

Un papier selon l'invention peut avantageusement être mis en œuvre pour préparer un stratifié haute ou basse-pression, ou un stratifié en continu.

Dans le cas d'un stratifié haute-pression, les composants de base du stratifié sont les feuilles kraft imprégnées de résine thermodurcissable et le papier décor de l'invention imprégné ou non d'une résine, notamment thermodurcissable.

Dans le cas d'un stratifié basse pression, les composants de base du stratifié sont le panneau support, comme un panneau de particules agglomérées, et un papier décor de l'invention imprégné ou non d'une résine, notamment thermodurcissable.

### EXEMPLES

On réalise tout d'abord un papier décor sur machine à papier, composé notamment de fibres de cellulose 100% fibres courtes d'Eucalyptus, de Ti02 pour un taux dans le substrat papetier de 35%, de pigments en quantité faible apportant une nuance pour cibler une couleur définie et de différents agents chimiques, notamment un agent de résistance à l'état humide.

La fabrication de ce papier suit le process papetier classique pour l'homme du métier, à savoir pulpage de la pâte à papier, raffinage, ajouts de composants (Ti02, pigments colorés, adjuvants), dilution puis formation de la feuille, pressage et séchage avant d'arriver au poste d'enduction qui se situe toujours sur la machine à papier.

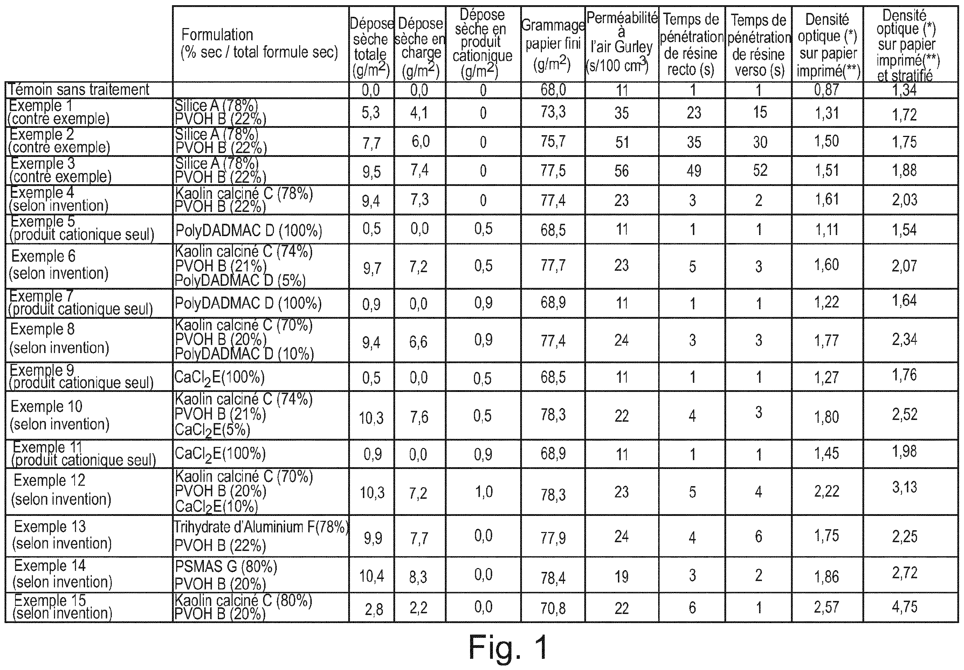

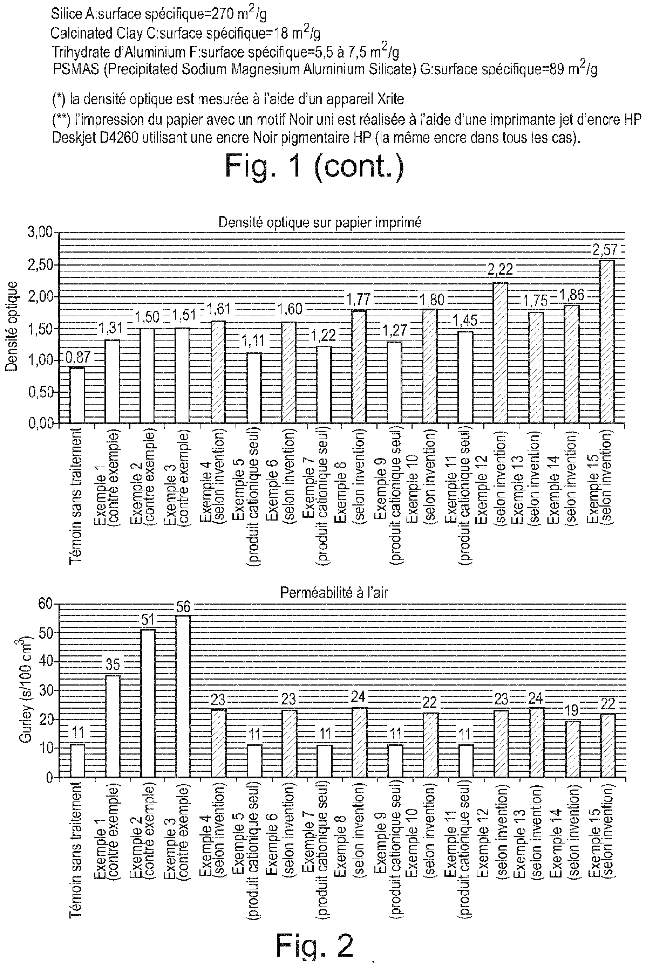

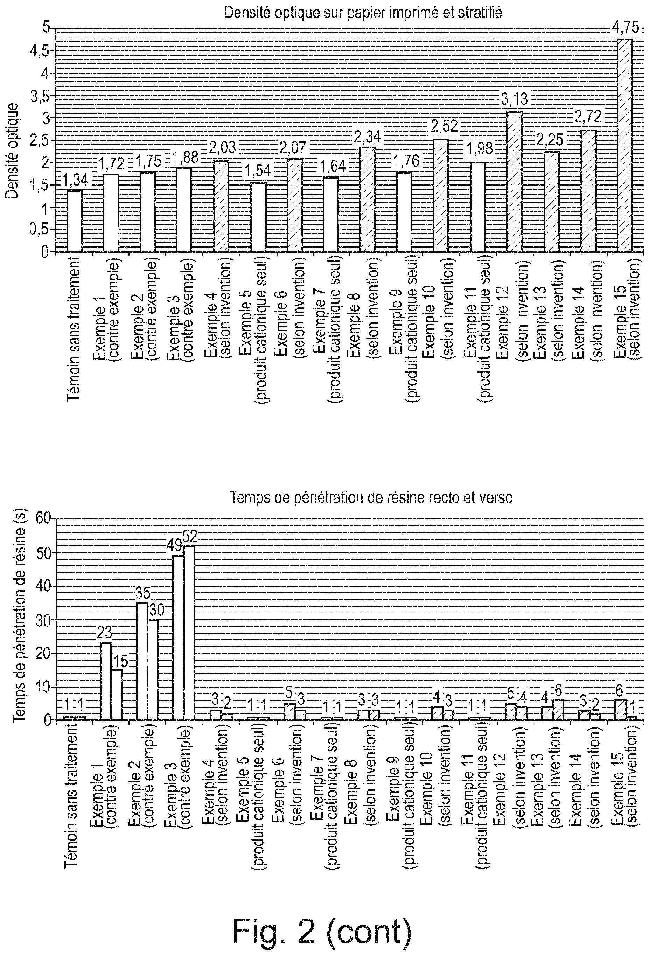

Les différentes formulations décrites dans les exemples 1 à 15 des tableaux correspondants aux figures 1 et 2 du dessin annexé sont donc appliquées au papier. Dans les exemples 1 à 14, le poste d'enduction est une presse encolleuse (Size Press), process papetier largement répandu. Pour ce qui est de l'exemple 15, l'enduction a été faite manuellement sur une face du substrat avec une barre rainurée de façon à simuler une enduction par couchage (type crayon, lame, etc.) ou transfert de film (Film Press). Les concentrations des formulations sont adaptées de façon à obtenir les déposes sèches dont les valeurs sont indiquées dans le tableau de la figure 1. Dans les exemples selon l'invention indiqués à la figure 1 (sauf pour l'exemple 15), le grammage final obtenu est compris entre 75 et 80 g/m² mais pourrait être ajusté en jouant sur le grammage du substrat. L'exemple 15 a un grammage plus faible, du fait de la dépose moindre appliquée sur une seule face du substrat, mais pourrait lui aussi être ajusté en jouant sur le grammage du substrat.

Les résultats mettent tout d'abord en évidence l'impact prononcé de la formulation à base de silice (appelée silice A dans l'exemple) qui diminue la perméabilité à l'air du papier (plus la mesure de l'indice Gurley est élevée est plus la perméabilité est faible). Ainsi, même avec seulement 5 g/m² de la formule donnée en exemple 1, le papier a déjà une valeur de Gurley de 35 sec alors que dans l'exemple 4 selon l'invention, la valeur de Gurley est de seulement 23 secondes pour une dépose de 9.4 g/m². Si la comparaison est faite à dépose proche, soit 9.5 g/m² dans l'exemple 3 vs 9.4 g/m² dans l'exemple 4, la différence est encore plus marquante, avec respectivement 56 secondes vs 23 secondes.

Les valeurs de temps de pénétration recto/verso de résine sont encore plus clairement impactées : 23/15 secondes dans l'exemple 1, 49/52 secondes dans l'exemple 3 contre 3/2 secondes dans l'exemple 4.

L'avantage de l'invention se visualise très bien dans les valeurs de densité optique puisque celle du papier de l'exemple 4 est de 1.61 contre 1.51 dans l'exemple 3. Les mêmes conclusions peuvent être faites sur les densités optiques des papiers après stratification.

Le traitement de l'invention permet ainsi de trouver un compromis extrêmement intéressant entre densité optique et temps de pénétration de résine, image de l'imprégnabilité.

Les autres exemples réalisés en ajoutant un produit cationique dans la formule selon l'invention (PolyDADMAC ou CaCl2) montrent un effet de synergie au niveau de la densité optique sans dégrader les temps de pénétration de résine.

L'expression « compris entre » s'entend bornes incluses, sauf si le contraire est spécifié.

## Revendications

1. Papier décor pour stratifié décoratif, imprimable par j et d'encre, comportant un substrat papetier comportant au moins un pigment opacifiant d'indice de réfraction supérieur à 2, et sur au moins une face du substrat un traitement de surface comportant un liant hydrosoluble et entre 0,5 et 9 g/m² d'une charge de surface spécifique comprise entre 2 et 100 m²/g et d'indice de réfraction inférieur ou égal à 2, le liant représentant en poids sec entre 10 et 50% du traitement de surface, la charge représentant entre 50 et 90 % en poids sec du traitement de surface, et le traitement de surface étant déposé à hauteur de 1 à 10 g/m² en poids sec par face traitée.

2. Papier selon la revendication 1, la surface spécifique de la charge allant de 2 à 50 m²/g, notamment de 10 à 30 m²/g.

3. Papier selon l'une des revendications 1 et 2, le papier présentant sur au moins la face ayant reçu le traitement de surface un temps de pénétration de résine inférieur ou égal à 10s, mieux à 5s, le papier présentant de préférence sur chacune de ses faces un temps de pénétration de résine inférieur ou égal à 10s, mieux à 5s.

4. Papier selon l'une quelconque des revendications 1 à 3, le traitement de surface étant déposé à hauteur de 3 à 6 g/m² en poids sec par face traitée, voire 4 à 5 g/m².

5. Papier selon l'une quelconque des revendications précédentes, le liant comportant du PVOH, mieux étant constitué de PVOH.

6. Papier selon l'une quelconque des revendications précédentes, le traitement de surface étant sans silice ou le traitement de surface comportant de la silice, notamment dans une proportion inférieure ou égale à 50% en masse de ladite charge, mieux entre 5 et 30 % en masse de ladite charge.

7. Papier selon l'une quelconque des revendications précédentes, la charge comportant au moins un composé choisi parmi les argiles, les argiles calcinées, les kaolins (naturel, calciné, délaminé, et autres silicates d'aluminium, notamment de synthèse), le talc, les terres de diatomées, le tri-hydrate d'aluminium, et leurs mélanges, le traitement de surface comportant de préférence un sel d'un métal alcalino-terreux, notamment CaCl₂, le traitement de surface comportant de préférence au moins un polymère cationique, notamment du polyDADMAC.

8. Papier selon l'une quelconque des revendications précédentes, le pigment opacifiant comportant du Ti02 ou étant constitué de Ti02.

9. Papier selon l'une quelconque des revendications précédentes, la quantité de pigment opacifiant dans le substrat papetier, notamment de Ti02, étant supérieure ou égale à 10% du poids sec total du papier en g/m², plus préférentiellement étant supérieure ou égale à 20%, encore mieux à 25%.

10. Papier selon l'une quelconque des revendications précédentes, seule une face du substrat papetier ayant reçu le traitement de surface.

11. Papier selon l'une quelconque des revendications précédentes, la quantité de charge étant comprise entre 2 et 4 g/m² par face traitée, le ratio de charge par rapport au liant étant de préférence supérieur à 3:1, notamment à 3,5 :1 en poids sec.

12. Papier décor imprimé, comportant un papier décor selon l'une quelconque des revendications précédentes et une impression jet d'encre.

13. Procédé de fabrication d'un papier décor, notamment selon l'une quelconque des revendications précédentes, comportant l'étape consistant à appliquer sur au moins une face d'un substrat papetier au moins une composition comportant un liant et une charge de surface spécifique comprise entre 2 et 100 m²/g et d'indice de réfraction inférieur ou égal à 2, en une quantité telle que la charge soit déposée en poids sec entre 0,5 et 9 g/m² sur le papier, la composition étant de préférence appliquée par un système à transfert de film.

14. Stratifié haute, basse-pression ou stratifié en continu, comprenant au moins un papier décor tel que défini selon l'une des revendications 1 à 12, ou obtenu selon un procédé tel que défini à la revendication 13.

## Patentansprüche

1. Dekorpapier für ein dekoratives Laminat, welches mit Tintenstrahl bedruckbar ist, welches aufweist: ein Papiersubstrat, das mindestens ein trübendes Pigment mit einem Brechungsindex, der größer als 2 ist, aufweist, und auf mindestens einer Seite des Substrats eine Oberflächenbehandlung, die ein wasserlösliches Bindemittel und zwischen 0,5 und 9 g/m² eines Füllstoffs mit einer spezifischen Oberfläche zwischen 2 und 100 m²/g und einem Brechungsindex, der kleiner oder gleich 2 ist, aufweist, wobei auf das Bindemittel zwischen 10 und 50 %, bezogen auf das Trockengewicht, der Oberflächenbehandlung entfallen, wobei auf den Füllstoff zwischen 50 und 90 %, bezogen auf das Trockengewicht, der Oberflächenbehandlung entfallen, und wobei die Oberflächenbehandlung mit einer Höhe von 1 bis 10 g/m², bezogen auf das Trockengewicht, je behandelte Seite aufgebracht wird.

2. Papier nach Anspruch 1, wobei die spezifische Oberfläche des Füllstoffs 2 bis 50 m²/g, insbesondere 10 bis 30 m²/g beträgt.

3. Papier nach einem der Ansprüche 1 und 2, wobei das Papier auf mindestens einer Seite, welche die Oberflächenbehandlung erhalten hat, eine Harz-Durchdringungszeit aufweist, die kleiner oder gleich 10 s, besser als 5 s ist, wobei das Papier vorzugsweise auf jeder seiner Seiten eine Harz-Durchdringungszeit aufweist, die kleiner oder gleich 10 s, besser als 5 s ist.

4. Papier nach einem der Ansprüche 1 bis 3, wobei die Oberflächenbehandlung mit einer Höhe von 3 bis 6 g/m², bezogen auf das Trockengewicht, je behandelte Seite aufgebracht wird, oder sogar von 4 bis 5 g/m².

5. Papier nach einem der vorhergehenden Ansprüche, wobei das Bindemittel PVOH aufweist oder, noch besser, aus PVOH besteht.

6. Papier nach einem der vorhergehenden Ansprüche, wobei die Oberflächenbehandlung kein Siliciumdioxid enthält oder die Oberflächenbehandlung Siliciumdioxid aufweist, insbesondere in einem Anteil, der kleiner oder gleich 50 % ist, bezogen auf die Masse des Füllstoffs, oder, noch besser, zwischen 5 und 30 % liegt, bezogen auf die Masse des Füllstoffs.

7. Papier nach einem der vorhergehenden Ansprüche, wobei der Füllstoff mindestens eine Verbindung aufweist, welche ausgewählt ist aus Tonen, kalzinierten Tonen, Kaolinen (natürliches, kalziniertes, delaminiertes Kaolin und andere Aluminiumsilikate, insbesondere synthetische), Talk, Diatomeenerden, Aluminiumtrihydrat und ihren Mischungen, wobei die Oberflächenbehandlung vorzugsweise ein Salz eines Erdalkalimetalls aufweist, insbesondere CaCl₂, wobei die Oberflächenbehandlung vorzugsweise mindestens ein kationisches Polymer aufweist, insbesondere PolyDADMAC.

8. Papier nach einem der vorhergehenden Ansprüche, wobei das trübende Pigment TiO₂ aufweist oder aus TiO₂ besteht.

9. Papier nach einem der vorhergehenden Ansprüche, wobei die Menge an trübendem Pigment in dem Papiersubstrat, insbesondere an TiO₂, größer oder gleich 10 % des Gesamttrockengewichts des Papiers in g/m² ist, stärker bevorzugt größer oder gleich 20 %, noch besser größer oder gleich 25 % ist.

10. Papier nach einem der vorhergehenden Ansprüche, wobei nur eine Seite des Papiersubstrats die Oberflächenbehandlung erhalten hat.

11. Papier nach einem der vorhergehenden Ansprüche, wobei die Menge an Füllstoff zwischen 2 und 4 g/m² je behandelte Seite liegt, wobei das Verhältnis von Füllstoff zu Bindemittel, bezogen auf das Trockengewicht, vorzugsweise größer als 3:1, insbesondere als 3,5:1 ist.

12. Bedrucktes Dekorpapier, welches ein Dekorpapier nach einem der vorhergehenden Ansprüche und einen Tintenstrahldruck aufweist.

13. Verfahren zur Herstellung eines Dekorpapiers, insbesondere nach einem der vorhergehenden Ansprüche, welches den Schritt umfasst, der darin besteht, auf mindestens eine Seite eines Papiersubstrats mindestens eine Zusammensetzung, die ein Bindemittel und einen Füllstoff mit einer spezifischen Oberfläche zwischen 2 und 100 m²/g und einem Brechungsindex, der kleiner oder gleich 2 ist, aufweist, in einer solchen Menge aufzutragen, dass der Füllstoff mit einem Trockengewicht zwischen 0,5 und 9 g/m² auf das Papier aufgebracht wird, wobei die Zusammensetzung vorzugsweise durch ein Filmtransfersystem aufgetragen wird.

14. Hochdrucklaminat, Niederdruck- oder kontinuierliches Laminat, welches mindestens ein Dekorpapier umfasst, wie gemäß einem der Ansprüche 1 bis 12 definiert, oder das gemäß einem Verfahren, wie in Anspruch 13 definiert, erhalten wurde.

## Claims

1. Decor paper for decorative laminate, which is inkjet printable, comprising a paper substrate comprising at least one opacifying pigment having a refractive index of greater than 2, and, on at least one face of the substrate, a surface treatment comprising a water-soluble binder and between 0.5 and 9 g/m² of a filler with a specific surface area of between 2 and 100 m²/g and a refractive index of less than or equal to 2, the binder representing, by dry weight, between 10% and 50% of the surface treatment, the filler representing between 50% and 90% by dry weight of the surface treatment, and the surface treatment being deposited in an amount of from 1 to 10 g/m² by dry weight per treated face.

2. Paper according to Claim 1, the specific surface area of the filler ranging from 2 to 50 m²/g, in particular from 10 to 30 m²/g.

3. Paper according to either of Claims 1 and 2, the paper having, on at least the face that has received the surface treatment, a resin penetration time of less than or equal to 10 s, better still 5 s, the paper preferably having, on each of its faces, a resin penetration time of less than or equal to 10 s, better still 5 s.

4. Paper according to any one of Claims 1 to 3, the surface treatment being deposited in an amount of from 3 to 6 g/m², or even 4 to 5 g/m², by dry weight per treated face.

5. Paper according to any one of the preceding claims, the binder comprising PVOH, better still being constituted of PVOH.

6. Paper according to any one of the preceding claims, the surface treatment being silica-free or the surface treatment comprising silica, in particular in a proportion of less than or equal to 50% by weight of said filler, better still between 5% and 30% by weight of said filler.

7. Paper according to any one of the preceding claims, the filler comprising at least one compound chosen from clays, calcined clays, kaolins (natural, calcined, delaminated, and other aluminium silicates, in particular synthetic), talc, diatomaceous earths, aluminium trihydrate, and mixtures thereof, in particular CaCl₂, the surface treatment preferably comprising at least one cationic polymer, in particular polyDADMAC.

8. Paper according to any one of the preceding claims, the opacifying pigment comprising TiO₂ or being constituted of TiO₂.

9. Paper according to any one of the preceding claims, the amount of opacifying pigment in the paper substrate, in particular of TiO₂, being greater than or equal to 10% of the total dry weight of the paper in g/m², more preferentially being greater than or equal to 20%, better still 25%.

10. Paper according to any one of the preceding claims, only one face of the paper substrate having received the surface treatment.

11. Paper according to any one of the preceding claims, the amount of filler being between 2 and 4 g/m², per treated face, the ratio of filler relative to binder preferably being greater than 3:1, in particular 3.5:1 by dry weight.

12. Printed decor paper, comprising a decor paper according to any one of the preceding claims and an inkjet print.

13. Process for manufacturing a decor paper, in particular according to any one of the preceding claims, comprising the step consisting in applying, on at least one face of a paper substrate, at least one composition comprising a binder and a filler with a specific surface area of between 2 and 100 m²/g and a refractive index of less than or equal to 2, in an amount such that the filler is deposited, by dry weight, between 0.5 and 9 g/m² on the paper, the composition preferably being applied by a film transfer system.

14. High-pressure, low-pressure or continuous-pressed laminate, comprising at least one decor paper as defined according to one of Claims 1 to 12, or obtained according to a process as defined in Claim 13.
